Europäisches Patentamt

European Patent Office

Office européen des brevets

(19)

(11) Veröffentlichungsnummer: **0 285 932 B1**

(12) # EUROPÄISCHE PATENTSCHRIFT

(45) Veröffentlichungstag der Patentschrift: **16.10.91**

(51) Int. Cl.⁵: **G01F 15/075, G01F 15/02**

(21) Anmeldenummer: **88104877.1**

(22) Anmeldetag: **25.03.88**

Verbunden mit 88902843.7/0356440
(europäische
Anmeldenummer/Veröffentlichungsnummer)
durch Entscheidung vom 19.10.90.

(54) **Anordnung zur Durchflussmessung.**

(30) Priorität: **31.03.87 DE 3710682**

(43) Veröffentlichungstag der Anmeldung:
**12.10.88 Patentblatt 88/41**

(45) Bekanntmachung des Hinweises auf die
Patenterteilung:
**16.10.91 Patentblatt 91/42**

(84) Benannte Vertragsstaaten:
**AT BE CH DE ES FR GB IT LI NL SE**

(56) Entgegenhaltungen:
**EP-A- 0 011 787      DE-A- 2 166 681**
**DE-A- 2 511 234      FR-A- 2 569 844**
**GB-A- 2 035 555      US-A- 3 425 274**

(73) Patentinhaber: **BASF Lacke + Farben Aktien-**
**gesellschaft**
**Max-Winkelmann-Strasse 80**
**W-4400 Münster(DE)**

(72) Erfinder: **Lindenbaum, Herbert,**
**Königsberger Strasse 20**
**W-4430 Steinfurt(DE)**
Erfinder: **Höhne, Wolfgang**
**Meerfeldstrasse 2**
**W-4400 Münster(DE)**
Erfinder: **Räckers, Klaus**
**Westrasse 29**
**W-4415 Sendenhorst(DE)**

## Beschreibung

Die Erfindung betrifft eine Anordnung zur Durchflußmessung gemäß dem Oberbegriff des Hauptanspruches.

Es sind - z.B. aus der GB 20 35 555 A - Massendurchflußmeßanordnungen bekannt, die nach dem Coriolis-Prinzip mit Rohrschleifen arbeiten, welche von dem zu messenden Fluid durchströmt werden und welche in Resonanzfrequenz versetzt werden, wobei aus Phasenverschiebungen innerhalb dieses Rohres die durchströmende Masse berechnet wird. Die Meßungenauigkeiten dieser Anordnungen werden dann unerwünscht groß, wenn sich das Meßrohr in einem instationären Betriebszustand befindet.

Wenn die Meßanordnung in einer Leitung eingebaut ist, durch die verschiedene Flüssigkeiten gepumpt werden, und wenn zwischen diesen Flüssigkeiten jeweils die Leitung mit einem Gas gespült wird, so treten am Anfang und am Ende jeder Flüssigkeits-Dosierung kurzfristig heterogene Gebiete auf, in denen diese Flüssigkeit übergangsweise mit einem Teil des Spülgases vermischt ist und in denen das Meßrohr einen instationären Betriebszustand einnimmt, da es sich erst auf die veränderte Masse in seinem Inneren einschwingen muß.

Aufgabe der Erfindung ist es, eine Anordnung zur Durchflußmessung fluider Medien zu schaffen, die nach dem Corioliskraft-Prinzip arbeitet und auch dann auswertbare Ausgangssignale liefert, wenn das Meßgerät in diskreten Zeitintervallen, nämlich mit Unterbrechungen, von dem Meßmedium durchströmt wird.

Diese Aufgabe wird gemäß dem kennzeichnenden Teil des Hauptanspruchs gelöst.

Vorteilhafte Ausgestaltungen der Erfindung sind in den abhängigen-Ansprüchen beschrieben.

Mit anderen Worten ausgedrückt: Es soll während der Zeit, in der vom Massendurchflußmeßgerät eine erkennbare Fehlmessung vorliegt, der Meßfehler dadurch verkleinert werden, daß statt des fehlerhaften Meßsignals ein künstlich erzeugtes Signal ausgewertet wird.

Ein Ausführungsbeispiel einer erfindungsgemäßen Anordnung zur Massendurchflußmessung soll im folgenden beschrieben und anhand der Zeichnungen erläutert werden.

Dabei zeigt

Fig. 1    eine Prinzipskizze einer Anlage, in der die Anordnung zur Massendurchflußmessung verwendet wird,

Fig. 2    ein Meßsignal bei der Startzeit einer Dosierung,

Fig. 3    das Meßsignal aus Fig. 2 bei Ende der Dosierung,

Fig. 4    ein Prinzipschaltbild der Fehlerkorrekturschaltung innerhalb der Anordnung zur Massendurchflußmessung,

Fig. 5    einen Vergleich des vom Meßgerät ausgegebenen Signals mit dem vom Zähler empfangenen Signal, während der Startzeit einer Dosierung und

Fig. 6    einen Vergleich wie in Fig. 5, jedoch am Ende derselben Dosierung.

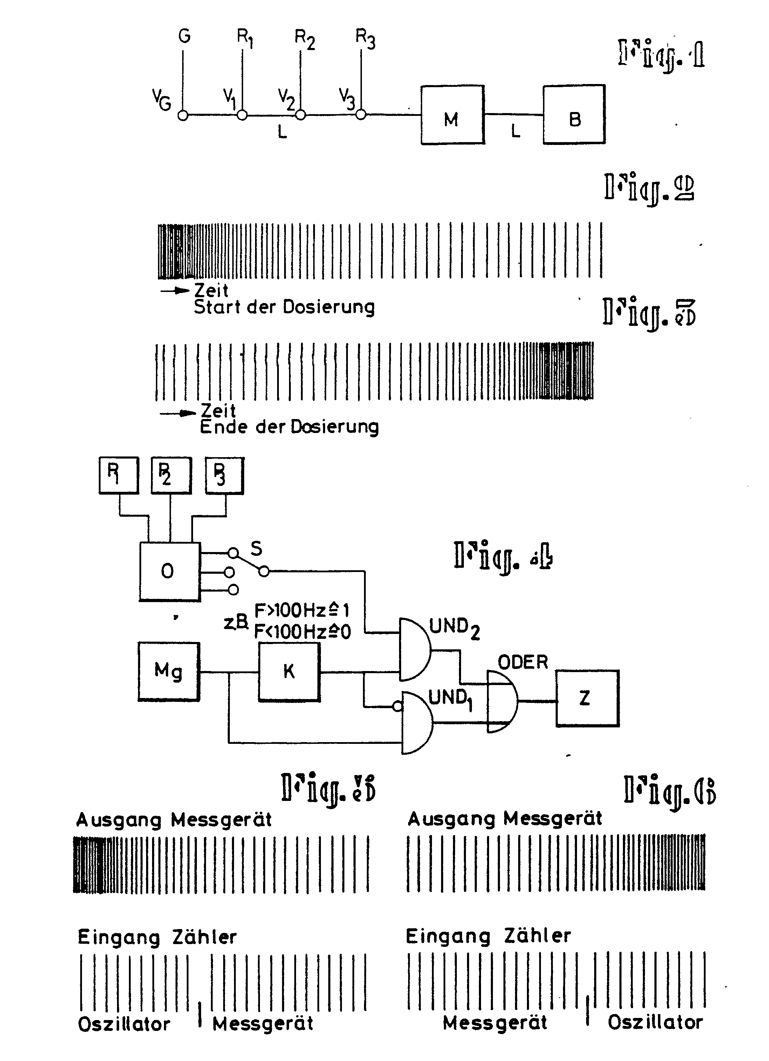

In Fig. 1 ist mit B ein Behälter gekennzeichnet, dem über eine Leitung L verschiedene Rohstoffe R1, R2, R3 zugeführt werden können. Zwischen den Zuführungen für die Rohstoffe und dem Behälter B ist eine Anordnung zur Massendurchflußmessung M vorgesehen. Außer den Rohstoffen R kann dem Behälter B über die Leitung L auch Spülgas G zugeführt werden Dieses Spülen erfolgt nach jeder Dosierung, bei der ein bestimmter Rohstoff R in den Behälter B gepumpt wird. Der Umfang jeder Dosierung bzw. Spülung wird durch Öffnen und Schließen von Ventilen V1, V2, V3 für die Rohstoffe bzw. Vg für das Spülgas bestimmt.

Das Meßgerät Mg innerhalb der Anordnung zur Massendurchflußmessung M weist ein Ausgangssignal in Form von Impulsen auf, deren Frequenz sich mit dem Massedurchfluß durch das Meßgerät ändert. Dabei nimmt die Frequenz mit der Masse zu.

Während des Beginns einer Dosierung liegt in dem Meßrohr der Anordnung zur Massendurchflußmessung zunächst nur das Spülgas vor. Anschließend, wenn das Meßrohr durch den Rohstoff R durchströmt wird, liegt für eine bestimmte Zeit ein heterogenes Zweiphasengemisch aus Spülgas und Rohstoff in dem Meßrohr vor und während dieser Zeit stimmen die vom Meßgerät abgegebenen Impulse nicht mit dem tatsächlichen Massendurchfluß überein. Dies ist aus Fig. 2 deutlich zu ersehen: Zu Beginn der Dosierung, also des Pumpvorgangs für den Rohstoff R sind die Meßsignale sehr hochfrequent und zeigen damit einen Durchfluß von sehr viel Masse an, während sich das Signal später auf einen Wert einpendelt, der einen niedrigeren Massedurchfluß kennzeichnet. Zu Beginn der Dosierung kann jedoch der Massendurchfluß noch nicht so groß sein wie später, da gerade am Beginn die Leitung und das Meßrohr noch nicht voll von dem Rohstoff R durchströmt werden, sondern sich eben auch noch Spülgas in diesen Leitungen befindet.

Teilweise geben die hochfrequenten Meßsignale zu Dosierungsbeginn Förderleistungen wieder, die die verwendete Pumpe gar nicht aufbringen kann.

Fig. 3 macht deutlich, daß ein gleichartiges Phänomen beim Beenden der Dosierung, zu beobachten ist. Auch hier täuscht das Meßsignal eine wesentlich größere als die tatsächlich durchfließende Masse vor.

Die Fehlmessungen während des Beginns und des Endes einer Dosierung liegen zwar nur im Sekundenbereich, je kleiner jedoch die zu dosierende Menge ist, desto stärker wirkt sich dieser Fehler aus, so daß eine Minimierung dieses Fehlers daher wünschenswert ist.

Die Korrekturschaltung, die diese Fehlerminimierung ermöglicht, ist in Fig. 4 dargestellt. Dabei ist mit Mg das Meßgerät innerhalb der Anordnung zur Massendurchflußmessung bezeichnet, das ein Meßsignal an den Zähler Z gibt. Da dieses Meßsignal - wie aus den Fig. 2 und 3 ersichtlich - aus Impulsen besteht, ist dem Meßgeräteausgang ein Frequenzkomparator K nachgeschaltet, der einen Signalweg der Meßimpulse zum Zähler Z ermöglicht, falls die Frequenz dieser Meßimpulse im Toleranzbereich liegt. Der Toleranzbereich kann beispielsweise dadurch vorgegeben sein, daß nur Frequenzen zur Auswertung gelangen, die einer Fördermenge bis zur maximalen Förderleistung der angeschlossenen Pumpe entsprechen.

Wird eine Fehlmessung dadurch offensichtlich, daß die Ausgangssignale des Meßgerätes eine Frequenz aufweisen, die außerhalb der Fördermöglichkeit der angeschlossenen Pumpe liegt, so wird statt des Ausgangssignals des Meßgerätes Mg ein synthetisch von einem Oszillator O erzeugtes Signal dem Zähler Z zugeleitet. Der in Fig. 4 dargestellte Oszillator weist die Möglichkeit auf, drei verschiedene Frequenzen zu erzeugen. Durch Pumpenrückmeldungen von den Rohstoffpumpen P1, P2 und P3, die jeweils verschiedene Sollfördermengen aufweisen, schaltet der Oszillator einen Schalter S in der Weise, daß sein Ausgangssignal jeweils der Sollfördermenge der gerade angeschlossenen Pumpe entspricht. Rein beispielhaft wird davon ausgegangen, daß eine Frequenz von 90 Hz am Ausgang des Meßgerätes Mg der maximalen Förderleistung der Pumpe entspricht. Der Frequenzkomparator K gibt in dem Fall, daß die Frequenz des Meßgeräteausgangs 100 Hz nicht überschreitet, kein Ausgangssignal ab. Der Schaltpunkt von 100 Hz ist einstellbar und kann für andere Meßgeräte bei anderen Frequenzen liegen. An dem Logikgatter "UND1" liegen nun zum einen das Meßgerätesignal an und zum anderen das negierte Ausgangssignal des Frequenzkomparators, so daß also beide Eingänge dieses "UND1"-Gatters ein Signal erhalten. Dadurch ist das Ausgangssignal dieses "UND1"-Gatters ebenfalls 1. Es wird dem logischen "ODER"-Gatter zugeleitet und von dort dem Zähler Z.

Der Oszillator O produziert gleichzeitig ein synthetisches Signal, welches in seiner Frequenz der Frequenz des Meßgeräteausgangs bei Sollfördermenge der angeschlossenen Pumpe entspricht. Dieses vom Oszillator erzeugte Signal wird dem Logikgatter "UND2" als erster Eingang zugeleitet, der damit gleich 1 ist. Vom Frequenzkomparator K liegt ein Ausgangssignal gleich 0 als zweiter Eingang am Logikgatter "UND2". Damit ist der Ausgang dieses Logikgatters ebenfalls auf 0 und von hier aus wird dem Zähler Z kein Signal zugeführt.

Wenn die Frequenz des Meßgeräteausgangs 100 Hz übersteigt und damit eine klare Fehlmessung dieses Gerätes vorliegt, so liegt an dem Logikgatter "UND1" als erster Eingang dieses Meßgerätesignal an, so daß dieser Eingang logisch gleich 1 ist. Der Frequenzkomparator K produziert ebenfalls ein Ausgangssignal, welches logisch gleich 1 ist. Da dieses jedoch vor dem zweiten Eingang des "UND1"-Gatters negiert wird, liegt dort 0 an. Damit geht von diesem Logikgatter kein Signal über das "ODER"-Gatter zum Zähler Z. Stattdessen liegt das Ausgangssignal des Frequenzkomparators K am Logikgatter "UND2" an einem Eingang an, der damit logisch gleich 1 ist und am anderen Eingang dieses Logikgatters liegt das synthetisierte Signal des Oszillators O an, so daß dieser zweite Eingang logisch auch gleich 1 ist. Damit wird von diesem Logikgatter "UND2" ein Signal an das "ODER"-Gatter und durch dieses zum Zähler Z geleitet.

Für die Zeit, in der das Meßrohr innerhalb der Anordnung zur Massendurchflußmessung M von einem heterogenen Zweiphasengemisch durchströmt wird, wird demnach auf eine Durchflußmessung verzichtet, da sie zu große Ungenauigkeiten aufweist. Stattdessen wird ein synthetisiertes Signal dem Zähler zur Auswertung zugeführt.

Fig. 5 zeigt einerseits das tatsächliche Meßsignal, das vom Meßgerät Mg an den Komparator weitergegeben wird und andererseits das Signal, das hinter der Korrekturschaltung entsteht und dem Zähler Z zugeführt wird. Fig. 5 zeigt dabei den Start einer Dosierung, d. h. den Zeitpunkt, nachdem ein Rohstoff R durch die Leitung L bis zur Anordnung zur Durchflußmessung M gepumpt worden ist und dort im Meßrohr zusammen mit dem restlichen Spülgas G als heterogenes Gemisch vorliegt. Dabei ist in Fig. 5 zu sehen, daß das Meßgerät für diesen Einschaltvorgang zunächst ein Ausgangssignal abgibt, dessen Frequenz um ein Mehrfaches über der normalen Frequenz entsprechend der Sollfördermenge der Pumpe liegt. Wie aus der Vergleichsdarstellung in Fig. 5 ersichtlich ist, wird für diesen Zeitraum der unglaubwürdig hohen Meßwerte dem Zähler das von Oszillator synthetisch erzeugte "Meßsignal" zugeführt und erst wenn das Ausgangssignal des Meßgerätes realistische Werte erreicht, werden diese Informationen dem Zähler zugeführt.

Fig. 6 zeigt dieselben Verhältnisse in umgekehrter zeitlicher Reihenfolge für die Abschlußphase einer Dosierung, an welche sich ein Spülvorgang mit dem Spülgas G anschließt.

Ein Meßfehler während des Dosierungsbeginns mag trotz Korrekturschaltung darin liegen, daß der vom Oszillator dem Zähler vorgegebene Massendurchfluß im Meßrohr nicht mit der wirklich durchfließenden Masse übereinstimmt, da das Meßrohr auch noch Reste des Spülgases G aufweist. Allerdings ist der Fehler zwischen dieser IST-Füllung des Meßrohrs und der vom Oszillator angenommenen SOLL-Füllung des Meßrohrs wesentlich geringer als der Unterschied zwischen der vom Meßgerät Mg angegebenen, z. T. vielfach überhöhten Förderleistung und der tatsächlichen.

Anhand von Fig. 1 wird deutlich, warum die Korrekturschaltung für die Massendurchflußmessung im wesentlichen nur bei der Startphase einer Dosierung in Kraft treten muß, wohingegen sie bei der Endphase dieser Dosierung nicht notwendigerweise benötigt wird. Es werden die Ventile V1, V2 oder V3 zu einem Zeitpunkt geschlossen, zu dem die Anordnung zur Massendurchflußmessung M noch nicht den Wert an Rohstoffen R1, R2 oder R3 anzeigt, der in den Behälter B gelangen soll. Dieses vermeintlich vorzeitige Schließen der Ventile V1 bis V3 bedeutet nämlich noch nicht das Ende der Dosierung des jeweiligen Rohstoffes, da noch die Menge an Rohstoff in den Behälter B gelangt, die zwischen dem Ventil V und der Meßanordnung M in der Leitung L steht und die noch nicht gemessen wurde. Bei Öffnen des Ventils VG und dem anschließenden Spülen der Leitung L mit dem Spülgas G wird dieser in der Leitung L stehende Rest durch die Meßanordnung M in den Behälter B gedrückt und während dieser Zeit tritt wieder ein heterogenes Zweiphasengemisch in der Meßeinrichtung auf. Die Masse, die sich zwischen der Meßanordnung M und den einzelnen Ventilen V1 bis V3 in der Leitung L befindet, ist für jeden der einzelnen Rohstoffe R1 bis R3 eine festgelegte Größe und braucht daher von der Meßanordnung M nicht mehr erfaßt zu werden. Daher fällt die zweite Phase, in der das Meßgerät Mg ungenaue Werte liefert, in einen zeitlichen Bereich, bei dem keine Messung der Durchflußmasse erforderlich ist. Die gesamte Meßanordnung wird daher während des Dosierungsendes nicht benötigt.

**Patentansprüche**

1. Anordnung zur Durchflußmessung fluider Medien mit einem Meßgerät nach dem Coriolis-Prinzip, wobei das Meßgerät von Meßmedium durchströmte Rohrschleifen aufweist, die in Schwingungen versetzt werden, sowie Sensoren zur Aufnahme der Bewegung zweier verschiedener Seiten der Rohrschleifen, und wobei das Meßgerät ein Ausgangssignal in Abhängigkeit vom Massendurchfluß erzeugt, sowie mit einem Zähler, der aus dem Ausgangssignal des Meßgerätes die insgesamt durchflossene Masse des Fluids berechnet, **dadurch gekennzeichnet,** daß zwischen Meßgerät und Zähler eine Fehlerkorrekturschaltung den Signalweg unterbricht, solange das Ausgangssignal des Meßgerätes einen festgelegten Toleranzbereich verläßt und daß währenddessen ein synthetisch erzeugtes Signal dem Zähler zugeführt wird.

2. Anordnung nach Anspruch 1 mit einem Massendurchflußmeßgerät, welches als Ausgangssignal Impulse abgibt, deren Frequenz sich mit dem Massendurchfluß ändert, dadurch gekennzeichnet, daß die Fehlerkorrekturschaltung

     a) einen Frequenzkomparator umfaßt, dem das Ausgangssignal des Meßgerätes zugeführt wird;

     b) einen Oszillator, der Impulse einer festgelegten Frequenz erzeugt;

     c) eine Logikschaltung, die entsprechend dem Schaltzustand des Frequenzkomparators das Frequenzsignal des Meßgerätes oder das vom Oszillator erzeugte Frequenzsignal dem Zähler zuleitet.

3. Anordnung nach Anspruch 2, dadurch gekennzeichnet, daß die Logikschaltung

     a) ein UND-Gatter aufweist, dem das Signal des Durchflußmeßgerätes und das negierte Signal des Frequenzkomparators zugeführt werden,

     b) ein zweites UND-Gatter, dem das Signal des Oszillators und das Signal des Frequenzkomparators zugeführt werden,

     c) ein ODER-Gatter, dem die Ausgangssignale der beiden UND-Gatter zugeführt werden und dessen Ausgang mit dem Zähler verbunden ist.

4. Anordnung nach Anspruch 2, dadurch gekennzeichnet, daß der Oszillator verschiedene Frequenzen erzeugen kann und je nach den Sollfördermengen verschiedener anschließbarer Pumpen die entsprechende Frequenz wählbar ist.

5. Vorrichtung nach einem oder mehreren der vorhergehenden Ansprüche, gekennzeichnet durch einen Alarmgeber, der aktiviert wird, wenn der Signalweg vom Meßgerät zum Zähler über eine bestimmte Zeitspanne hinaus unterbrochen wird.

**Claims**

1. Arrangement for measuring the flow of fluid media by means of a measuring instrument according to the Coriolis principle, in which arrangement the measuring device exhibits tube loops through which medium to be measured flows and which are set into oscillations, and sensors for sensing the movement of two different sides of the tube loops, and in which arrangement the measuring instrument generates an output signal in dependence of the mass flow, and comprising a counter which calculates from the output signal of the measuring instrument the total mass of the fluid which has flowed through, characterised in that an error correction circuit between the measuring instrument and the counter interrupts the signal path for as long as the output signal of the measuring instrument leaves a predetermined range of tolerances, and in that, in the meantime, a synthetically generated signal is fed to the counter.

2. Arrangement according to Claim 1, comprising a mass flow measuring instrument which emits as an output signal pulses, the frequency of which changes with the mass flow, characterised in that the error correction circuit
   a) comprises a frequency comparator which is supplied with the output signal of the measuring instrument;
   b) an oscillator which generates pulses of a predetermined frequency;
   c) a logic circuit which feeds the frequency signal of the measuring instrument or the frequency signal generated by the oscillator to the counter depending on the switching state of the frequency comparator.

3. Arrangement according to Claim 2, characterised in that the logic circuit
   a) exhibits an AND gate which is supplied with the signal of the flow measuring instrument and the negated signal of the frequency comparator,
   b) a second AND gate which is supplied with the signal of the oscillator and the signal of the frequency comparator,
   c) an OR gate which is supplied with output signals of the two AND gates and the output of which is connected to the counter.

4. Arrangement according to Claim 2, characterised in that the oscillator is capable of generating various frequencies and the appropriate frequency can be selected depending on the nominal capacities of various pumps which can be connected.

5. Device according to one or more of the preceding claims, characterised by an alarm signalling device which is activated when the signal path from the measuring instrument to the counter is interrupted for longer than a particular period of time.

## Revendications

1. Dispositif pour la mesure du débit de milieux fluides, comportant un appareil de mesure selon le principe de Coriolis, l'appareil de mesure présentant des boucles de tube traversées par le milieu à mesurer, que l'on fait osciller, ainsi que des capteurs pour capter le mouvement des deux différents côtés des boucles de tube, et l'appareil de mesure produisant un signal de sortie en fonction du débit masse, ainsi qu'un compteur, qui calcule, à partir du signal de sortie de l'appareil de mesure, la masse du fluide ayant circulé au total, caractérisé par le fait qu'un circuit correcteur d'erreurs interrompt le chemin de signal entre l'appareil de mesure et le compteur, aussi longtemps que le signal de sortie de l'appareil de mesure sort d'une plage de tolérance déterminée, et que, pendant ce temps, un signal produit de façon synthétique est adressé au compteur.

2. Dispositif selon la revendication 1, comportant un appareil de mesure du débit masse, lequel délivre, comme signal de sortie, des impulsions dont la fréquence varie avec le débit masse, caractérisé par le fait que le circuit correcteur d'erreurs comprend :
   a) un comparateur de fréquence, auquel est adressé le signal de sortie de l'appareil de mesure ;
   b) un oscillateur, qui produit des impulsions d'une fréquence déterminée ;
   c) un circuit logique, qui, en correspondance avec l'état de commutation du comparateur de fréquence, conduit au compteur le signal de fréquence de l'appareil de mesure ou le signal de fréquence produit par l'oscillateur.

3. Dispositif selon la revendication 2, caractérisé par le fait que le circuit logique présente :
   a) une porte ET, à laquelle sont adressés le signal de l'appareil de mesure du débit et le signal inversé logiquement du comparateur de fréquence ;
   b) une deuxième porte ET, à laquelle sont adressés le signal de l'oscillateur et le signal du comparateur de fréquence ;
   c) une porte OU, à laquelle sont adressés les signaux de sortie des deux portes ET et dont la sortie est reliée au compteur.

4. Dispositif selon la revendication 2, caractérisé par le fait que l'oscillateur peut produire différentes fréquences et, selon les débits de transport prescrits de différentes pompes raccordables, la fréquence correspondante peut être sélectionnée.

5. Dispositif selon l'une ou plusieurs des revendications précédentes, caractérisé par un émetteur d'alarme qui est activé lorsque le chemin de signal de l'appareil de mesure au compteur est interrompu au-delà d'un laps de temps défini.

EP 0 285 932 B1

Fig. 1

Fig. 2

Zeit
Start der Dosierung

Fig. 3

Zeit
Ende der Dosierung

Fig. 4

F>100Hz ≙ 1
F<100Hz ≙ 0

UND₂

UND₁

ODER

Fig. 5

Ausgang Messgerät

Eingang Zähler

Oszillator    Messgerät

Fig. 6

Ausgang Messgerät

Eingang Zähler

Messgerät    Oszillator

7